# EUROPEAN PATENT SPECIFICATION

(11) **EP 3 017 966 B1**
(45) Date of publication and mention of the grant of the patent: **07.06.2017**
(21) Application number: 14820205.4
(22) Date of filing: 04.07.2014
(51) Int. Cl.: B60C 11/04, B60C 11/117, B60C 11/13, B60C 11/03

(54) **HEAVY-DUTY PNEUMATIC TIRE**
SCHWERLASTLUFTREIFEN
PNEUMATIQUE RÉSISTANT

(30) Priority: 05.07.2013 JP 2013141540
(43) Date of publication of application: 11.05.2016
(73) Proprietor: Bridgestone Corporation, Tokyo 104-8340 (JP)
(72) Inventor: OGANE, Shun, Kodaira-shi Tokyo 187-8531 (JP); KAWAKAMI, Yuki, Kodaira-shi Tokyo 187-8531 (JP); TOYODA, Kenji, Kodaira-shi Tokyo 187-8531 (JP); ONO, Hiroaki, Kodaira-shi Tokyo 187-8531 (JP)
(74) Representative: Oxley, Robin John George
(86) International application number: PCT/JP2014/003575
(87) International publication number: WO 2015/001810

(56) References cited:
- EP-A1- 2 460 671
- GB-A- 1 090 189
- JP-A- H11 348 509
- JP-A- S50 138 503
- JP-A- 2001 039 124
- JP-A- 2007 191 093
- JP-A- 2009 137 315
- JP-A- 2012 179 948
- US-A- 3 880 218

## Description

### TECHNICAL FIELD

The disclosure relates to a pneumatic tire for heavy load improved in durability while ensuring wear resistance.

### BACKGROUND

Pneumatic tires for heavy load, which are for use in such vehicles as construction/mining vehicles and trucks/buses, are required to have a traction performance under various road conditions. To meet such demand, widely known as a pneumatic tire for heavy load is a pneumatic tire having a pattern (lug pattern) in which a number of lug grooves extending in the tread width direction are arranged on the tread surface at a predetermined distance from each other in the tread circumferential direction (see Patent Literature (PTL) 1). Attention is also drawn to the disclosures of US3880218 and GB1090189.

Meanwhile, the pneumatic tire for heavy load is desired to be improved in wear resistance so as to be used for over a long duration under severe road conditions. To meet such desire, it has been considered effective to increase the thickness of the tread in the tire radial direction, to reduce the negative ratio on the tread surface, to thereby impart an improved rigidity to the land portions defined by the lug grooves.

### CITATION LIST

### Patent Literature

PTL 1: JP 2008-062706A

### SUMMARY

### (Technical Problem)

However, when the wear resistance is improved by means of the aforementioned configuration, the tread is increased in its volume, which increases heat generation in the tread resulting from the expansion and contraction of the tread rubber during load rolling of the tire. Such increase in heat generation rises the temperature of the tread, causing heat deterioration such as rubber separation, with the result that the tire is reduced in durability.

In light thereof, it has been desired to optimize the balance between wear resistance and durability in a pneumatic tire for heavy load having a lug pattern, so as to improve both of the performances. Thus, it could be helpful to provide a pneumatic tire for heavy load improved in durability while ensuring wear resistance.

### (Solution to Problem)

Provided is a pneumatic tire for heavy load including, on a tread surface of the tire, land portions defined by a plurality of lug grooves each extending in the tread width direction while opening at one end thereof to the tread ground-contact end, in which:
the tire has a negative ratio Nc of 2% to 10% in a tread center side region which corresponds to a tread region having a width that accounts for 30% of the tread ground-contact width Tw with the tire equator being in the center in the tread width direction;
the lug groove has a depth da, the land portion has a width Rw, where the land portion width Rw is defined for each arbitrary point on a land portion center line P, and the land portion width Rw on the point refers to a width in an end view taken along a plane that passes through the point and is perpendicular to the land portion center line P, and the land portion has an extending length L which is a length of the land portion center line P connecting the midpoints of the tread circumferential width of the land portion between the tire equator and the tread ground-contact end, so that the land portion center line has a length of 0.5 L or more in a segment where Rw/da is 1.3 to 2.5; and
the land portion center line has a length of 0.3 L or more in a segment having a tilt angle α of 60° or less relative to the tire equator direction.

The disclosed pneumatic tire for heavy load is capable of improving durability of the tire while ensuring wear resistance of the tire.

Further, in the disclosed pneumatic tire for heavy load, the land portion center line has a plurality of land portion center line segments extending in different directions, among which a segment positioned on the tread width direction outside has, relative to the tire equator direction, a tilt angle that is smaller as compared with a tilt angle, relative to the tire equator direction, of a segment positioned on the tire equator side. This configuration allows for further improving the tire in durability.

Here, the "tread surface" refers to a contact surface of a tire with a flat plate when the tire, which is applied to an applicable rim and filled with a predetermined air pressure, is placed, in a stationary state, vertically to the flat plate and applied with a load associated with a predetermined mass. In this connection, the "applicable rim" refers to a rim defined in any of the below-mentioned standards which is determined according to an effective industrial standard in areas where tires are produced or used; examples of the standards include: JATMA (Japan Automobile Tyre Manufacturers Association) year book in Japan; ETRTO (European Tyre and Rim Technical Organisation) STANDARD MANUAL in Europe; and TRA (THE TIRE and RIM ASSOCIATION INC.) YEAR BOOK in the US. The "predetermined air pressure" refers to an air pressure (maximum air pressure) corresponding to the load on a single wheel that is associated with a predetermined mass in a tire of applicable size, and the "load that is associated with a predetermined mass" refers to the maximum mass permitted to be loaded onto a single wheel tire in the aforementioned standards such as JATMA.

Further, the "tread ground-contact end" refers to each of both ends of the tread surface in the tread width direction.

Further, the dimensions of the disclosed pneumatic tire for heavy load refer to those measured when the tire is mounted onto an applicable rim with a predetermined air pressure with no load applied thereon, unless otherwise specified. Further, "extending in the tread width direction" does not refer to "extending in a direction exactly parallel to the tread width direction", but refers to extending in a direction having components of the tread width direction. Further, the "tread ground-contact width Tw" refers to the maximum linear distance of the tread surface in the tread width direction. Further, the "negative ratio" refers to the ratio of the groove area to the area of the tread surface.

Further, the "lug groove depth da" may be defined for each arbitrary point on the land portion center line, and the "lug groove depth da" at the point refers to a value obtained by averaging the maximum depths of two lug grooves defining a land portion, in an end view taken along a plane that passes through the point and is perpendicular to the land portion center line. When a straight line perpendicular to the land portion center line intersects only one of the two lug grooves defining the land portion, the "lug groove depth da" corresponds to the maximum depth of the said one of the lug grooves, in the aforementioned end view.

Further, "the land portion center line that has a length of 0.5 L/0.3 L or more in a segment" is not necessarily limited to a single continuous land portion center line segment having the aforementioned length. Rather, the aforementioned length may be the sum of the lengths of a plurality of intermittent land portion segments. Further, the "tilt angle of the land portion center line segment relative to the tire equator direction" refers to a smaller one of the angles made between the extending direction of the land portion center line segment and the tire equator. Further, when the land portion center line segment has a curvature, the tilt angle refers to a smaller one of the angles made by the direction of a straight line connecting the starting point and the end point of a portion having the curvature, relative to the tire equator.

In the disclosed pneumatic tire for heavy load, the lug groove may preferably have a width Gw of 4 mm to 20 mm in the tread center side region. This configuration allows for further improving the tire in durability, and is likely to produce an effect of ensuring wear resistance of the tire.

Further, in the disclosed pneumatic tire for heavy load, the depth da of the lug groove may preferably be 50 mm to 150 mm. This configuration allows for further improving the tire in durability, which is likely to produce an effect of ensuring wear resistance of the tire.

In the disclosed pneumatic tire for heavy load, the tire may preferably have a negative ratio Ns of 10% to 35% in a tread shoulder side region which corresponds to a tread region on the outside of the tread center side region in the tread width direction. This configuration allows for further improving the tire in durability while ensuring traction performance and pulling force of the tire.

### [DELETED]

Further, the disclosed pneumatic tire for heavy load may further include, in the tread shoulder side region, a first rib groove extending along the tread circumferential direction, in which the first rib groove may preferably have a depth di of 0.3 da to 0.7 da. This configuration allows for further improving the tire in durability, and may also be capable of ensuring rigidity of the land portion while ensuring the volume of air flowing in and out of the groove.

Here, the "groove extending along the tread circumferential direction" is not necessarily limited to the one in a linear shape parallel to the tread circumferential direction. Rather, such groove may also refer to a groove in, for example, a zigzag shape or waveform shape that makes a round generally in the tread circumferential direction of the tire as a whole. Further, the "first rib groove depth di" refers to the largest one of distances, within the first rib groove, measured in the tire radial direction from the groove bottom of the first rib groove to the tread surface contour.

Further, the disclosed pneumatic tire for heavy load may preferably further include, in the tread center side region, a second rib groove extending along the tread circumferential direction and having the other end of the lug groove opening thereto, in which the second rib groove may preferably have a depth Dr that is larger than the depth di of the first rib groove. The aforementioned configuration allows for further improving the tire in durability, making it easy to obtain the aforementioned effect of dissipating heat.

Here, the "second rib groove depth Dr" refers to the largest one of distances, within the second rib groove, measured in the tire radial direction from the groove bottom of the second rib groove to the tread surface contour.

Further, the disclosed pneumatic tire may preferably have second rib grooves disposed on both sides relative to the tire equator, in which the lug groove opening at one end thereof to the tread ground-contact end disposed on one side relative to the tire equator has the other end opening only to the second rib groove disposed on the same side as the lug groove relative to the tire equator. The aforementioned configuration allows for further improving the tire in durability.

### (Advantageous Effect)

The disclosed pneumatic tire for heavy load is capable of improving durability while ensuring wear resistance.

### BRIEF DESCRIPTION OF THE DRAWINGS

In the accompanying drawings:
FIG. 1A is a partial development view of a tread surface of the disclosed pneumatic tire for heavy load according to Embodiment 1;
FIG. 1B is an end view of the pneumatic tire for heavy load taken along the line I-I of FIG. 1A;
FIG. 2A is a partial development view of a tread surface of the disclosed pneumatic tire for heavy load according to Embodiment 2;
FIG. 2B is an end view of the pneumatic tire for heavy load taken along the line I-I of FIG. 2A;
FIG. 3A is a partial development view of a tread surface of the disclosed pneumatic tire for heavy load according to Embodiment 3;
FIG. 3B is an end view of the pneumatic tire for heavy load taken along the line I-I of FIG. 3A;
FIG. 3C is an end view of the pneumatic tire for heavy load taken along the line II-II of FIG. 3A;
FIG. 4A is a partial development view of a tread surface of the disclosed pneumatic tire for heavy load according to Embodiment 4;
FIG. 4B is an end view of the pneumatic tire for heavy load taken along the line I-I of FIG. 4A;
FIG. 4C is an end view of the pneumatic tire for heavy load taken along the line II-II of FIG. 4A;
FIG. 4D is an end view of the pneumatic tire for heavy load taken along the line III-III of FIG. 4A;
FIG. 5A is a partial development view of a tread surface of the disclosed pneumatic tire for heavy load according to Embodiment 5;
FIG. 5B is an end view of the pneumatic tire for heavy load taken along the line I-I of FIG. 5A;
FIG. 5C is an end view of the pneumatic tire for heavy load taken along the line II-II of FIG. 5A;
FIG. 5D is an end view of the pneumatic tire for heavy load taken along the line III-III of FIG. 5A; and
FIG. 6 is a sectional view in the tire width direction of Embodiments of the disclosed pneumatic tire for heavy load.

### DETAILED DESCRIPTION

In the following, Embodiments of the disclosed pneumatic tire for heavy load are each illustrated by way of an example, with reference to the accompanying drawings.

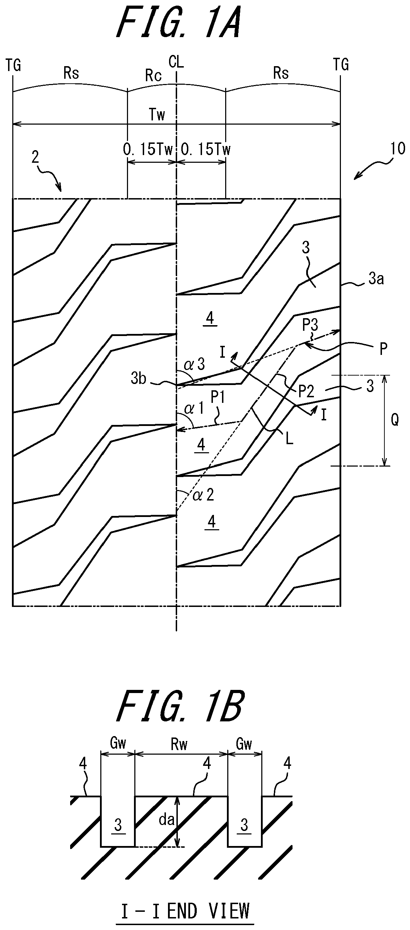

FIG. 1A illustrates part of a tread surface of the disclosed pneumatic tire for heavy load according to Embodiment 1.

The pneumatic tire for heavy load 10 according to Embodiment 1 disclosed herein has a plurality of lug grooves 3 extending in the tread width direction, on a tread surface 2 positioned between tread ground-contact ends TG, the lug grooves 3 each having one end opening to the tread ground-contact end while the other end terminating in the vicinity of the tire equator CL. Then, on the tread surface 2, the lug grooves 3 define land portions 4. In the disclosed pneumatic tire for heavy load, the other end of each of the lug grooves 3 may or may not terminate within the land portions.

Here, FIG. 1A shows a land portion center line P that connects the midpoints of the tread circumferential direction width of the land portion 4 between the tire equator CL and the tread ground-contact end TG, the land portion center line P having a length corresponding to the extension length L of the land portion 4. Further, FIG. 1B is an end view (taken along the line I-I of FIG. 1A), which is taken along a plane passing though an arbitrary point on the land portion center line P as being perpendicular to the land portion center line P, in which the lug groove 3 has a depth da and the land portion 4 has a width Rw.

At this time, in the pneumatic tire 10, the land portion center line needs to have a length of 0.5 L or more in a segment where Rw/da is 1.3 to 2.5 (not shown in FIG. 1A in particular).

The land portion center line having a length of 0.5 L or more in a segment where Rw/da is 1.3 or more is capable of ensuring the rigidity of the land portion and ensuring the wear resistance performance. Further, the land portion center line has a length of 0.5 L or more in a segment where Rw/da is 2.5 or less, so that the volume of the land portion can be reduced, which can suppress heat generation in the tread.

Here, the land portion center line P has a tilt angle generally defined as α relative to the tire equator direction. In the pneumatic tire 10, the land portion center line P is composed of land portion line segments P1 to P3 having tilt angles α (α1 to α3 in FIG. 1A) that are different from one another, that is, the land portion line segments P1 to P3 extending in directions different from one another.

At this time, in the pneumatic tire 10, the land portion center line needs to have a length of 0.3 L or more in a segment with the tilt angle α of 60° or less (the land portion center line segment P2 in FIG. 1A).

With the angle α2 being 60° or less in the land portion center line segment P2, the land portion 4 may be configured to have a relatively large extending length L while ensuring a relatively large extending length of the lug groove 3 defining the segment P2. Then, the land portion 4 may be increased in surface area, so that heat generated in the land portion 4 can effectively be dissipated through the lug groove 3. As a result, heat deterioration of the tire can be suppressed, which may improve the tire in durability.

Further, in the pneumatic tire 10, the angle α2 may preferably be defined to be 30° or more. With the angle α2 being 30° or more, the traction performance can be improved while ensuring the effect of allowing air to flow into and out of the groove.

For the reasons mentioned above, in the disclosed pneumatic tire for heavy load, the angle α may preferably satisfy the relation of 30° ≤ α ≤ 60° in the land portion center line segment having a length of 0.3 L or more.

Here, in the pneumatic tire 10, the land portion center line P has a plurality of land portion center line segments P1 to P3 extending in different directions. Furthermore, when the land portion center line is curved in shape, the inflection point of the curve may serve as a boundary of the land portion enter line segments.

Further, in the pneumatic tire 10, the lug groove has a width Gw of 4 mm to 20 mm in a tread center side region. Here, the "lug groove width Gw" refers to a width of a lug groove in a direction perpendicular to the extending direction of the lug groove.

The width Gw defined to be 4 mm or more is capable of ensuring a route to dissipate, to the outside of the system, heat generated in the tread, which reduces accumulation of heat in the tread, to thereby reduce heat deterioration of the tire. As a result, the tire can further be improved in durability. Further, the width Gw may be defined to be 20 mm or less, so as to suppress reduction of rigidity of the tread, making it easy to obtain an effect of ensuring wear resistance of the tire. As described above, in the disclosed pneumatic tire for heavy load, the lug grooves each may preferably have a width falling within the aforementioned range.

Further, in the pneumatic tire 10, the lug groove 3 has a depth da of 50 mm to 150 mm.

With the depth da being 50 mm or more, the land portion may have a sufficient surface area including the area of the groove walls of the lug grooves, making it possible to efficiently dissipate heat generated in the land portion. As a result, heat deterioration of the tire may further be reduced, which may further improve the tire in durability. Meanwhile, with the depth da being 150 mm or less, the land portion rigidity can be ensured, which may easily achieve an effect of ensuring wear resistance of the tire. As described above, in the disclosed pneumatic tire for heavy load, the lug grooves each may preferably have a depth falling within the aforementioned range.

Further, the disclosed pneumatic tire 10 according to Embodiment 1 needs to have a negative ratio Nc of 2% to 10% in a center side region Rc, the center side region Rc corresponding to a tread region having a width that is 30% of a tread ground-contact width Tw with the tire equator CL being in the center in the tread width direction.

The tire having the negative ratio Nc of 2% or more in the center side region Rc is capable of ensuring a path to dissipate, to the outside of the system, heat generated in the tread, which reduces accumulation of heat in the tread, to thereby reduce heat deterioration of the tire. As a result, the tire can be improved in durability. Further, the ratio Nc may be defined to be 10% or less, so as to suppress reduction of rigidity of the tread, allowing for ensuring wear resistance of the tire. Then, the ratio Nc may be defined to be in the aforementioned range in the center side region Rc of the tread where the applied load concentrates in general, to thereby make it easy to obtain the aforementioned effect. As described above, the disclosed pneumatic tire for heavy load needs to have a negative ratio falling within the aforementioned range in the center side region of the tread.

Here, the pneumatic tire 10 of Embodiment 1 also has a negative ratio of 2% to 10% in two tread regions each having a width that accounts for 15% of the tread ground-contact width Tw with the tire equator CL being in the center in the tread width direction.

Then, the pneumatic tire 10 has a negative ratio Ns of 10% to 35% in a shoulder side region Rs, the shoulder side region Rs corresponding to a tread region defined in between a position spaced apart outward in the tire width direction from the tire equator CL at a distance of 15% of the tread width and the tread ground-contact width TG.

The tire having the negative ratio Ns defined to be 10% or more in the shoulder side region Rs is capable of increasing the amount of air flowing into the lug groove from one end (end on the tread ground-contact side) of the lug groove at rolling of the tire, which allows for efficient dissipation of heat generated in the land portion. As a result, heat deterioration of the tire can further be suppressed, which may further improve the tire in durability. Further, the negative ratio Ns may be defined to be 35% or less so as to ensure tire traction performance and pulling force on unpaved roads, unique to the lug pattern. As described above, the disclosed pneumatic tire for heavy load may preferably have a negative ratio of 10% to 35% in the shoulder side region of the tread.

Here, the pneumatic tire 10 of Example 1 also has a negative ratio of 10% to 35% in two shoulder side regions on both sides relative to the tire equator.

As described above, the disclosed pneumatic tire for heavy load has, on the tire tread surface, land portions defined by a plurality of lug grooves extending in the tread width direction, the lug grooves each opening at one end to the tread ground-contact end, the tire having the negative ratio Nc of 2% to 10% in the tread center side region which corresponds to a tread region having a width that accounts for 30% of the tread ground-contact width Tw with the tire equator being in the center in the tread width direction, in which the lug grooves each have a depth da, the land portion has a width Rw, and the land portion center line P connecting the midpoints of the tread circumferential direction width of the land portion between the tire equator and the tread ground-contact width has a length L which corresponds to the extending length of the land portion, so that the land portion center line has a length of 0.5 L or more in a segment where Rw/da is 1.3 to 2.5 and the land portion center line has a length of 0.3 L or more in a segment having a tilt angle α of 60° or less relative to the tire equator direction. The tire configured as described above may be improved in durability while ensuring wear resistance thereof.

The pneumatic tire 10, which has a tread pattern that is point symmetry relative to a point on the tire equator, may also have a tread pattern that is line symmetry relative to the tire equator CL or a tread pattern that has no symmetry.

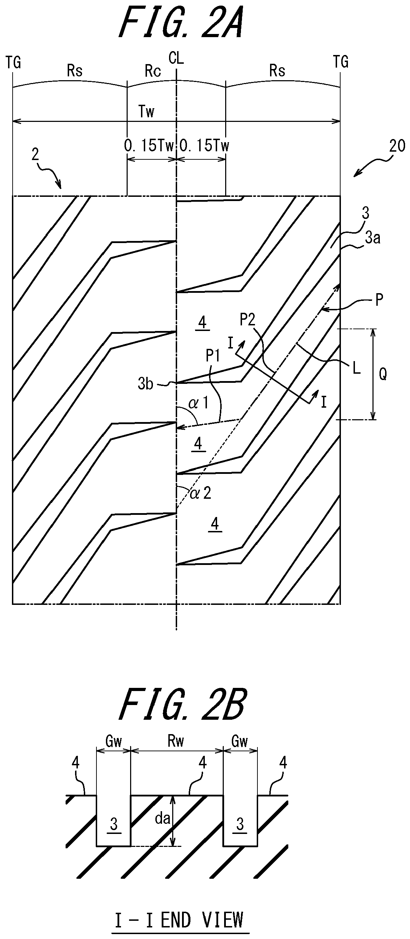

FIG. 2A shows part of the tread surface of the disclosed pneumatic tire for heavy load according to Embodiment 2. In the following, the same elements as those of the disclosed pneumatic tire for heavy load of Embodiment 1 shown in FIG. 1A are denoted by the same reference symbols, and the description thereof is omitted.

The disclosed pneumatic tire for heavy load 20 of Embodiment 2 is different in configuration of the lug grooves from the disclosed pneumatic tire for heavy load 10 of Embodiment 1, whereas the rest of the configuration is similar to that of the disclosed pneumatic tire for heavy load 10 of Embodiment 1.

In the pneumatic tire 20, the land portion center line P is composed of land portion center line segments P1, P2 having tilt angles α (α1, α2) that are different from each other.

At this time, in the pneumatic tire 20 as well, the land portion center line needs to have a length of 0.3 L or more in a segment (the land portion center line segment P2 of FIG. 2A) with the tilt angle α of 60° or less.

Then, in the pneumatic tire 20, of the land portion line segments, the segment P2 positioned on the outside in the tread width direction has a tilt angle α2 relative to the tire equator direction, the angle α being smaller as compared with the tilt angle α1 of the segment P1 of the land portion center line segments, the segment P1 being positioned on the tire equator side.

The tire configured as described above is capable of allowing air to effectively flow into the lug groove from one end (end on the tread ground-contact side) of the lug groove at rolling of the tire, which allows for efficient dissipation of heat generated in the land portion. As a result, heat deterioration of the tire can further be suppressed, and the tire may further be improved in durability.

For the same reason, in the disclosed pneumatic tire for heavy load, the land portion center line segment positioned outside in the tread width direction has a tilt angle relative to the tire equator direction that is smaller as compared with a tilt angle relative to the tire equator direction of the land portion center line segment positioned on the tire equator side.

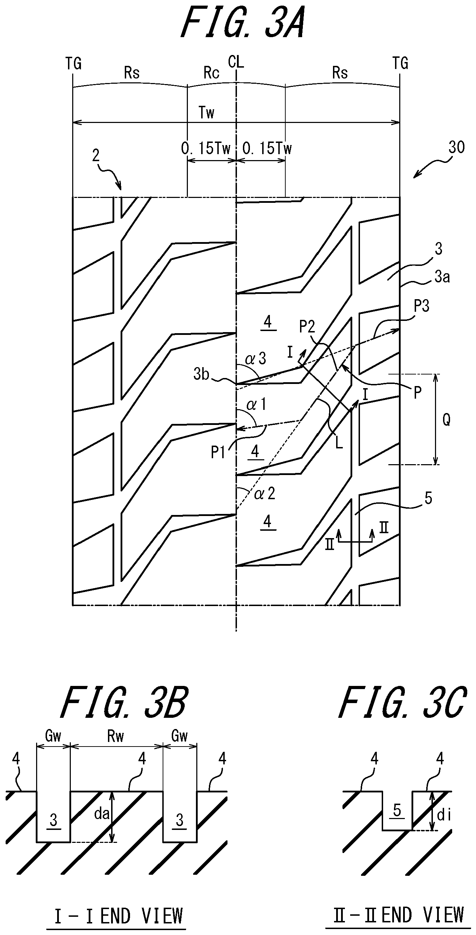

FIG. 3A shows part of the tread surface of the disclosed pneumatic tire for heavy load according to Embodiment 3. In the following, the same elements as those of the disclosed pneumatic tire for heavy load of Embodiment 1 shown in FIG. 1A are denoted by the same reference symbols, and the description thereof is omitted.

The disclosed pneumatic tire for heavy load 30 of Embodiment 3 is different in configuration of first rib grooves in below from the disclosed pneumatic tire for heavy load 10 of Embodiment 1, whereas the rest of the configuration is similar to that of the disclosed pneumatic tire for heavy load 10 of Embodiment 1.

The pneumatic tire 30 has a first rib groove 5 extending along the tread circumferential direction, in each of the shoulder side regions Rs on both sides of the tire equator CL.

FIG. 3C is an end view (taken along the line II-II of FIG. 3A) of the pneumatic tire 30 cut along the tire meridian, in which the first rib groove 5 has a depth di. At this time, the depth di of the first rib groove 5 is 0.3 da to 0.7 da.

As the tire further includes the first rib groove 5 communicating with the lug groove 3, the amount of air flowing into the lug groove 3 at rolling of the tire can be increased, so as to efficiently dissipate heat generated in the land portion 4. As a result, heat deterioration of the tire can further be suppressed, which may further improve the tire in durability.

The depth di may be 0.3 da or more, so as to ensure the volume of air flowing into the groove or flowing out of the groove. Alternatively, the depth di may be 0.7 da or smaller, so as to ensure rigidity of the land portion.

As described above, in the disclosed pneumatic tire for heavy load may preferably further include, in the shoulder side region, a first rib groove extending in the tread circumferential direction, and the first rib groove may preferably have a depth that is 0.3 to 0.7 of the depth of the lug groove.

The pneumatic tire 30 of Embodiment 3 includes two first rib grooves 5 in the shoulder side regions Rs on both sides relative to the tire equator CL. However, the disclosed pneumatic tire for heavy load may have only one first rib groove or three or more first rib grooves disposed in the shoulder side regions Rs.

Further, in the disclosed pneumatic tire for heavy load, the first rib groove may preferably be disposed in between a position spaced apart outward in the tire width direction from the tire equator at a distance of 50% of the tread width and a position spaced apart outward in the tire width direction from the tire equator at a distance of 80% of the tread width.

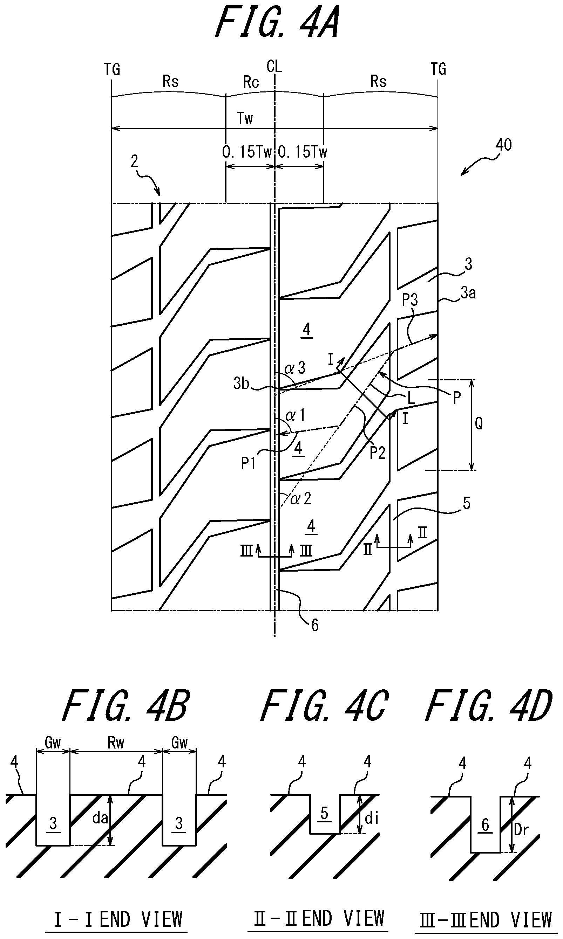

FIG. 4A shows part of the tread surface of the disclosed pneumatic tire for heavy load according to Embodiment 4. In the following, the same elements as those of the disclosed pneumatic tires for heavy load of Embodiments 1 and 3 shown in FIG. 1A and FIG. 3A, respectively, are denoted by the same reference symbols, and the description thereof is omitted.

The disclosed pneumatic tire for heavy load 40 of Embodiment 4 is different in configuration of second rib grooves in below from the disclosed pneumatic tire for heavy load 30 of Embodiment 3, whereas the rest of the configuration is similar to that of the disclosed pneumatic tire for heavy load 30 of Embodiment 3.

The pneumatic tire 40 further includes a second rib groove 6 extending along the tread circumferential direction, in the center side region Rc including the tire equator CL. Here, the lug groove 3 opens at one end 3a to the tread ground-contact end TG at one side relative to the tire equator, and the lug groove 3 opens at the other end 3b to the second rib groove on the same side relative to the tire equator.

FIG. 4D is an end view (taken along the line III-III of FIG. 4A) of the pneumatic tire 40 cut along the tire meridian, in which the second rib groove 6 has a depth Dr. At this time, the depth Dr of the second rib groove 6 is larger as compared with the depth di.

As the tire further includes the second rib groove 6 communicating with the lug groove 3, air can pass through between the one end 3a and the other end 3b of the lug groove 3, so as to efficiently dissipate heat generated in the land portion 4. As a result, heat deterioration of the tire can further be suppressed, which may further improve the tire in durability. Further, when the depth Dr is defined to be larger than the depth di (Dr > di), the aforementioned heat dissipation effect becomes more easy to obtain. As described above, the disclosed pneumatic tire for heavy load may preferably further include, in the land portion, the second rib groove extending along the tread circumferential direction while having the other end of the lug groove opening thereto, and the second rib groove may preferably have a depth larger than the depth of the first rib groove.

Here, in the pneumatic tire 40, the lug grooves 3a all have the other ends 3b opened to the second rib groove 6. However, in the disclosed pneumatic tire for heavy load, only some of the other ends 3b may open to the second rib groove. Further, the pneumatic tire 40 has one second rib groove, but the disclosed pneumatic tire for heavy load may include a plurality of the second rib grooves.

Still further, in the disclosed pneumatic tire for heavy load, the second rib groove may preferably be disposed in between a position spaced apart outward in the tire width direction from the tire equator at a distance of 0% of the tread width and a position spaced apart outward in the tire width direction from the tire equator at a distance of 15% of the tread width.

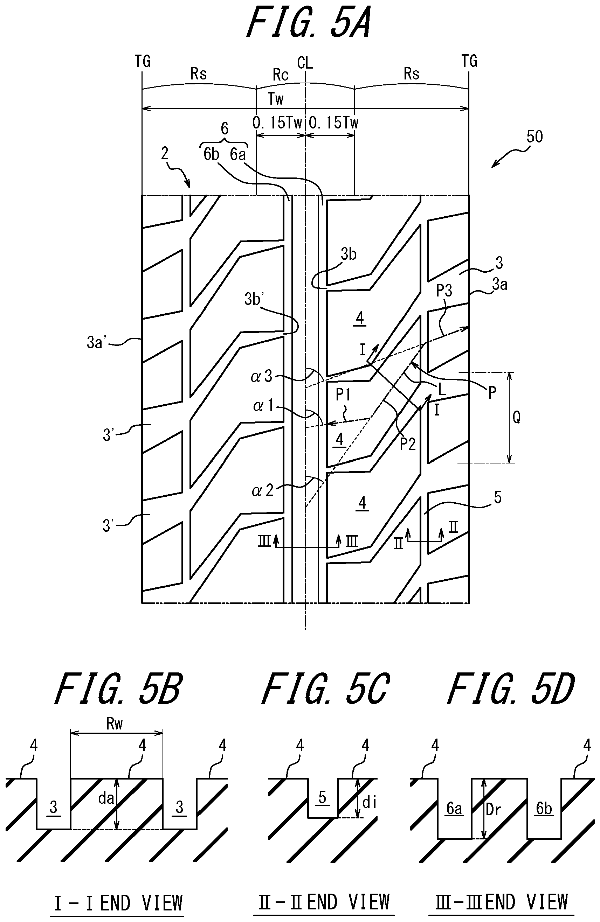

FIG. 5A shows part of the tread surface of the disclosed pneumatic tire for heavy load according to Embodiment 5. In the following, the same elements as those of the disclosed pneumatic tires for heavy load of Embodiments 1 and 4 shown in FIG. 1A and FIG. 4A, respectively, are denoted by the same reference symbols, and the description thereof is omitted.

The disclosed pneumatic tire for heavy load 50 of Embodiment 5 is different in configuration of second rib grooves in below from the disclosed pneumatic tire for heavy load 40 of Embodiment 4, whereas the rest of the configuration is similar to that of the disclosed pneumatic tire for heavy load 40 of Embodiment 4.

The pneumatic tire 50 includes the second rib grooves 6a, 6b one by one on each of the both sides relative to the tire equator CL, and defined therebetween are land portions extending in series in the tread circumferential direction. Then, focusing on the lug grooves 3 starting from the tread ground-contact end TG on one side relative to the tire equator CL and the lug grooves 3' opening to the tread ground-contact end TG on the other side relative to the tire equator CL, all the lug grooves 3 open to the second rib groove 6a on one side relative to the tire equator CL, that is, on the same side as the lug grooves 3, while all the lug grooves 3' open to the second rib groove 6b on the other side relative to the tire equator CL, that is, on the same side as the lug grooves 3'.

The aforementioned configuration is capable of producing heat dissipation effect obtained from an air flow coming from the second rib groove to go out through one end (end on the tread ground-contact end) of the lug groove, simultaneously with producing heat dissipation effect obtained from an air flow coming from one end of the lug groove to go out from the second rib groove. As a result, heat deterioration of the tire can further be suppressed, which may further improve the tire in durability. Thus, in the disclosed pneumatic tire for heavy load, the second rib grooves may preferably be configured as described above.

In the pneumatic tire 50, all the other ends 3b, 3b' of the lug grooves 3 open to the second rib grooves 6a, 6b. However, in the disclosed pneumatic tire for heavy load, only some of the other ends 3b, 3b' may open to the second rib groove. Further, the pneumatic tire 50 includes two second rib grooves 6a, 6b; however, three or more second rib grooves 6 may also be disposed.

Further, in the disclosed pneumatic tire for heavy load, the lug grooves may each have a width of 30 mm to 150 mm. The first rib groove may have a width of 10 mm to 50 mm, and the second rib groove may have a width of 5 mm to 30 mm. Here, the widths of the first rib groove and the second rib groove each refer to a width in a direction perpendicular to the extending direction of the groove.

Furthermore, in the disclosed pneumatic tire for heavy load, the grooves each may or may not be constant in depth across the entire length of the groove. Further, in the disclosed pneumatic tire for heavy load, the land portion center line or the land portion center line segment may form tilt angles α, α1 to α3 of 30° to 90° in the extending direction relative to the tire equator. Further, in the disclosed pneumatic tire for heavy load according to Embodiments 1 to 5, a number of lug grooves are disposed in the tread circumferential direction at a constant pitch Q. This configuration allows for improving tire traction performance and pulling force on unpaved roads. Here, the pitch Q may be defined to be 100 mm to 250 mm.

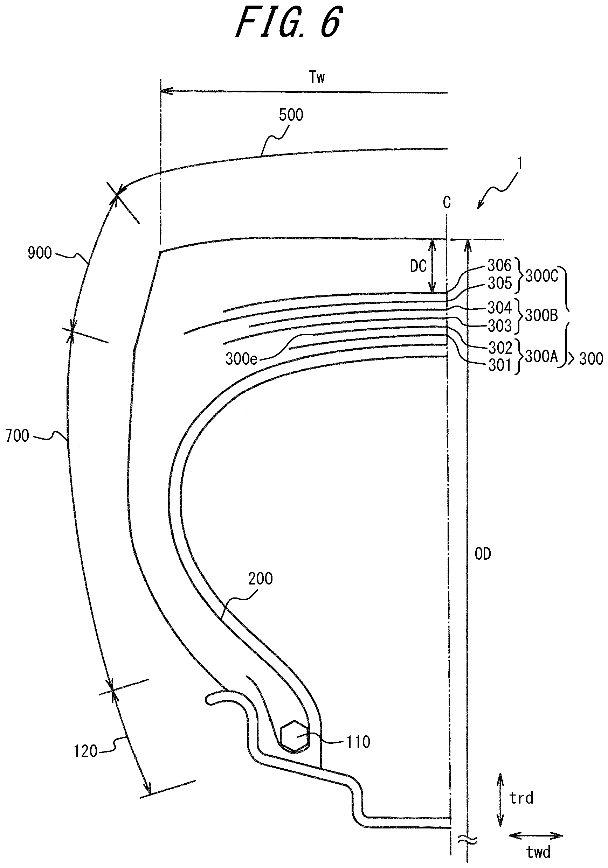

FIG. 6 is a sectional view in the tire width direction according to Embodiments of the disclosed pneumatic tire for heavy load (hereinafter, also referred to as "tire 1"). FIG. 6 does not illustrate the tread patterns of FIGS. 1 to 5.

As illustrated in FIG. 6, the tire 1 has a thicker rubber gauge (rubber thickness) of the tread portion 500, as compared with pneumatic tires to be mounted on passenger vehicles.

Specifically, the tire 1 has a tire outer diameter OD and a rubber gauge DC of the tread portion 500 at the position of a tire equatorial plane C, which satisfy the relation of DC/OD ≥ 0.015.

The tire outer diameter OD (mm in unit) refers to a diameter of the tire 1 in a portion (generally, the tread portion 500 in the vicinity of the tire equator plane C) where the outer diameter of the tire 1 reaches its maximum. The rubber gauge DC (mm in unit) refers to a rubber thickness of the tread portion 500 at the position of the tire equatorial plane C. The rubber gauge DC does not include the thickness of a belt 300. In the case where a circumferential groove is formed in a position including the tire equatorial plane C, the rubber gauge DC refers to a rubber thickness of the tread portion 500 at a position adjacent to the circumferential groove.

As illustrated in FIG. 6, the tire 1 includes a pair of bead cores 110, a carcass 200, and the belt 300 composed of a plurality of belt layers. FIG. 6 shows only a half width of the tire 1, but the other half width of the tire 1, although not shown, has the same structure.

The bead core 110 is provided in a bead portion 120. The bead core 110 is formed of a bead wire (not shown).

The carcass 200 constitutes the skeleton of the tire 1. The carcass 200 is positioned from the tread portion 500 to the bead portion 120 across a buttress portion 900 and a sidewall portion 700.

The carcass 200 is disposed across the pair of the bead cores 110 and has a toroidal shape. In this Embodiment, the carcass 200 wraps around the bead core 110. The carcass 200 is in contact with the bead core 110. The carcass 200 is supported at both ends in the tire width direction twd by the pair of bead portions 120.

The carcass 200 has a carcass cord extending in a predetermined direction, when viewed in plan from the tread surface 2 side. In this Embodiment, the carcass cord extends along the tire width direction twd. The carcass cord may use, for example, steel wire.

The belt 300 is disposed in the tread portion 500. The belt 300 is positioned on the outside of the carcass 200 in the tire radial direction trd. The belt 300 extends in the tire circumferential direction. The belt 300 has a belt cord that extends as being oblique relative to the predetermined direction in which the carcass cord extends. The belt cord may use, for example, a steel cord.

The belt 300 is composed of a plurality of belt layers including a first belt layer 301, a second belt layer 302, a third belt layer 303, a fourth belt layer 304, a fifth belt layer 305, and a sixth belt layer 306.

The first belt layer 301 is positioned on the outside of the carcass 200 in the tire radial direction trd. The first belt layer 201 is positioned on the innermost side among the plurality of belt layers constituting the belt 300. The second belt layer 302 is positioned on the outside of the first belt layer 301 in the tire radial direction trd. The third belt layer 303 is positioned on the outside of the second belt layer 302 in the tire radial direction trd. The fourth belt layer 304 is positioned on the outside of the third belt layer 303 in the tire radial direction trd. The fifth belt layer 305 is positioned on the outside of the fourth belt layer 304 in the tire radial direction trd. The sixth belt layer 306 is positioned on the outside of the fifth belt layer 305 in the tire radial direction trd. The sixth belt layer 306 is positioned on the outermost side, in the tire radial direction trd, among the plurality of belt layers constituting the belt 300. The first belt layer 301, the second belt layer 302, the third belt layer 303, the fourth belt layer 304, the fifth belt layer 305, and the sixth belt layer 306 are arranged in this order from the inside to the outside in the tire radial direction trd.

In this Embodiment, in the tire width direction twd, the first belt layer 301 and the second belt layer 302 each have a width (which is measured along the tire width direction twd; hereinafter the same) that is 25% or more and 70% or less of the tread width TW. In the tire width direction twd, the third belt layer 303 and the fourth belt layer 304 each have a width that is 55% or more and 90% or less of the tread width TW. In the tire width direction twd, the fifth belt layer 305 and the sixth belt layer 306 each have a width that is 60% or more and 110% or less of the tread width TW.

In this Embodiment, in the tire width direction twd, the fifth belt layer 305 is larger in width than the third belt layer 303, the third belt layer 303 is equal to or larger in width than the sixth belt layer 306, the sixth belt layer 306 is larger in width than the fourth belt layer 304, the fourth belt layer 304 is larger in width than the first belt layer 301, and the first belt layer 301 is larger in width than the second belt layer 302. In the tire width direction twd, of the plurality of belt layers constituting the belt 300, the fifth belt layer 305 is largest in width and the second belt layer 302 is smallest in width. Accordingly, the belt 300 composed of a plurality of belt layers includes a shortest belt layer (i.e., the second belt layer 302) that is shortest in length in the tire width direction twd.

The second belt layer 302 as the shortest belt layer has a belt end 300e, which is the edge in the tire width direction.

In this Embodiment, when viewed in plan from the tread surface 2 side, the first belt layer 301 and the second belt layer 302 each have a tilt angle of 70° or more and 85° or less, relative to the carcass cord. The third belt layer 303 and the fourth belt layer 304 each have a tilt angle of 50° or more and 75° or less, relative to the carcass cord. The fifth belt layer 305 and the sixth belt layer 306 each have a tilt angle of 50° or more and 70° or less, relative to the carcass cord.

The belt 300 composed of a plurality of belt layers includes: an inner crossing belt group 300A; an intermediate crossing belt group 300B; and an outer crossing belt group 300C. The crossing belt groups 300A to 300C refer to a plurality of belt layer groups, in which belt cords constituting the belt layers in each group cross each other (preferably across the tire equatorial plane) in between the belt layers adjacent to each other in the group when viewed in plan from the tread surface 2 side.

The inner crossing belt group 300A includes a pair of belt layers, and is positioned on the outside of the carcass 200 in the tire radial direction trd. The inner crossing belt group 300A is composed of the first belt layer 301 and the second belt layer 302. The intermediate crossing belt group 300B includes a pair of belt layers, and is positioned on the outside of the inner crossing belt group 300A in the tire radial direction trd. The intermediate crossing belt group 300B is composed of the third belt layer 303 and the fourth belt layer 304. The outer crossing belt group 300C includes a pair of belt layers, and is positioned on the outside of the intermediate crossing belt group 300B in the tire radial direction trd. The inner crossing belt group 300C is composed of the fifth belt layer 305 and the sixth belt layer 306.

In the tire width direction twd, the inner crossing belt group 300A has a width that is 25% or more and 70% or less of the tread width TW. In the tire width direction twd, the intermediate crossing belt group 300B has a width that is 55% or more and 90% or less of the tread width TW. In the tire width direction twd, the outer crossing belt group 300C has a width that is 60% or more and 110% or less of the tread width TW.

When viewed in plan from the tread surface 2 side, the belt cord of the inner crossing belt group 300A has a tilt angle of 70° or more and 85° or less relative to the carcass cord. When viewed in plan from the tread surface 2 side, the belt cord of the intermediate crossing belt group 300B has a tilt angle of 50° or more and 75° or less relative to the carcass cord. When viewed in plan from the tread surface 2 side, the belt cord of the outer crossing belt group 300C has a tilt angle of 50° or more and 70° or less relative to the carcass cord.

When viewed in plan from the tread surface 2 side, the belt cord of the inner crossing belt group 300A has the largest tilt angle relative to the carcass cord. The belt cord of the intermediate crossing belt group 300B is equal to or larger than the belt cord of the outer crossing belt group 300C in terms of the tilt angle relative the carcass cord.

The disclosed pneumatic tire for heavy load may have an ordinary structure having, for example, a tread portion, a pair of sidewall portions extending inward in the tire radial direction from both side portions of the tread, a carcass toroidally extending from each of the sidewall portions across the bead portion extending inward in the tire radial direction, and a belt disposed outward in the tire radial direction of the carcass.

### EXAMPLES

Examples of the disclosed pneumatic tire are described in below, which shall be in no way limit the present disclosure. Examples 3 and 4 are according to the present invention, whereas Examples 1 and 2 are not.

In Examples, a pneumatic tire for heavy load (53/80R63) was used.

In Example 1, a pneumatic tire for heavy load with the specifications shown in Table 1 was fabricated, which was subjected to the following evaluations. In Comparative Example 1, a pneumatic tire for heavy load with the specifications shown in Table 1 was fabricated, which was similarly subjected to the following evaluations as Example 1.

### (Performance Evaluation)

The pneumatic tire for heavy load thus fabricated was assembled to an applicable rim (36.00/5.0) specified in JATMA standard to manufacture a rim-assembled pneumatic tire for heavy load. The pneumatic tire for heavy load thus manufactured was mounted on a vehicle at an internal pressure of 600 kPa under a load condition of 80 t, which was then subjected to tests (1) and (2) in below, to thereby evaluate the performance as a pneumatic tire for heavy load.

### (1) Wear Resistance Test

The tread rigidity, which is relevant to the wear resistance of the tire, was evaluated based on the cornering power of the tire. On a dram tester, the aforementioned pneumatic tires for heavy load were each run on a drum of 7 m in diameter at a speed of 20 km/h for 24 hours with the camber angle of 0°. Then, the cornering power at a cornering angle of 5° was measured to evaluate the pneumatic tire for heavy load. Specifically, an index was calculated for relative evaluation with the evaluation result of Comparative Example 1 being 100. Table 1 shows the evaluation results, in which the larger index indicates the more excellent cornering power, i.e., the more excellent wear resistance of the pneumatic tire for heavy load.

### (2) Durability Test

A small hole for measuring tire temperature was made in the tread of a pneumatic tire for heavy load to be tested. On a dram tester, the aforementioned pneumatic tires for heavy load were each run on a drum of 7 m in diameter at a speed of 20 km/h for 24 hours. Then, the tire after the running was measured for temperature at a position spaced apart from the tire equator by a distance of 30% of the tread ground-contact width while being spaced apart from the belt outward in the tire radial direction by a distance of 5 mm, by inserting a temperature probe through the small hole formed in the aforementioned position, so as to measure the width of temperature reduction, which was evaluated. Specifically, an index was calculated for relative evaluation with the evaluation result of Comparative Example 1 being 0. Table 1 shows the evaluation results, in which the smaller index indicates the lower heat generation and the more excellent durability in the pneumatic tire for heavy load.

In Comparative Examples 2, 3, Examples 2 to 4, performance evaluation was similarly performed as in Example 1, except in that pneumatic tires for heavy load having the specifications of Table 1 were fabricated, which were used for the evaluation.

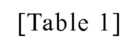

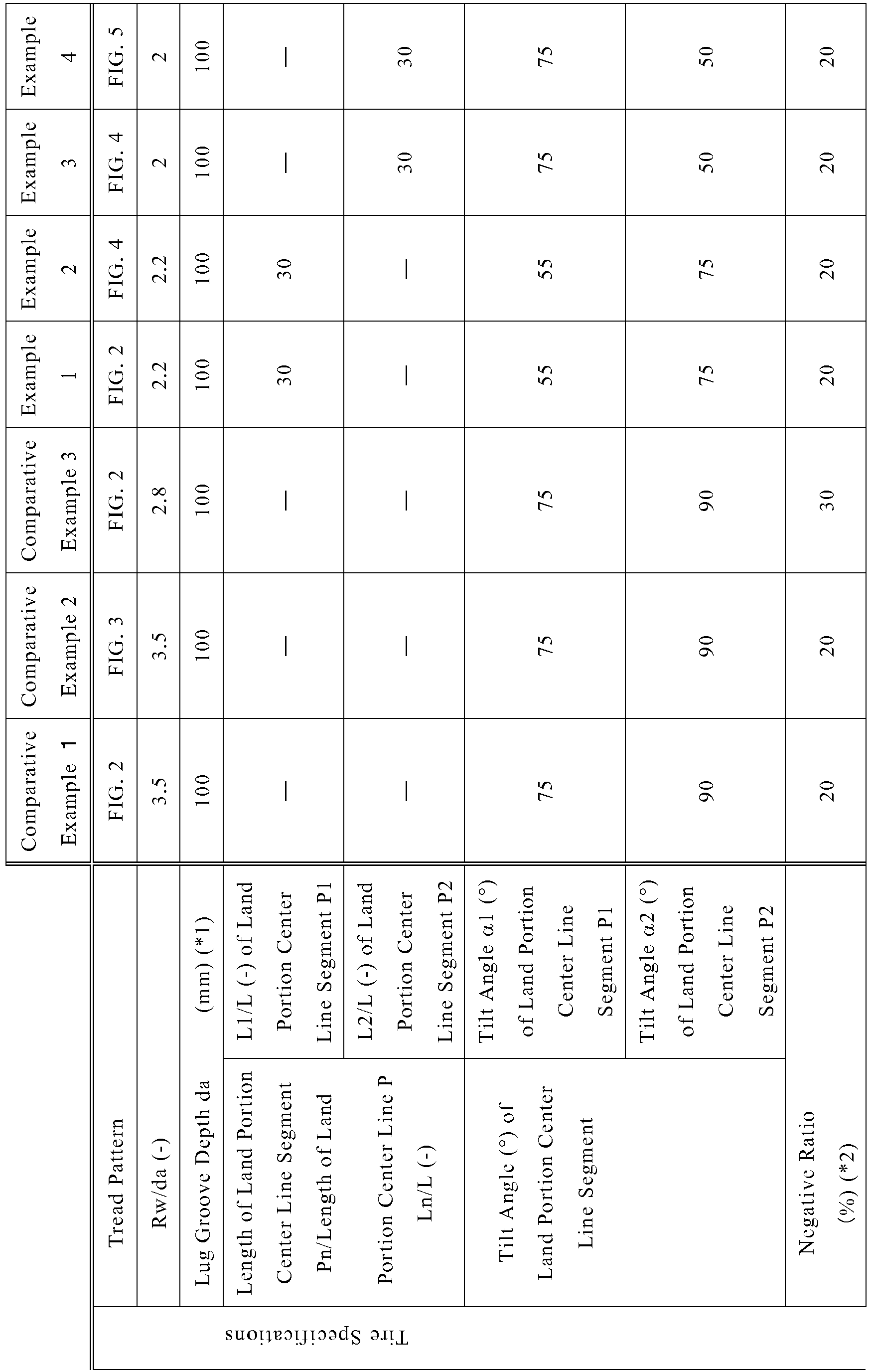

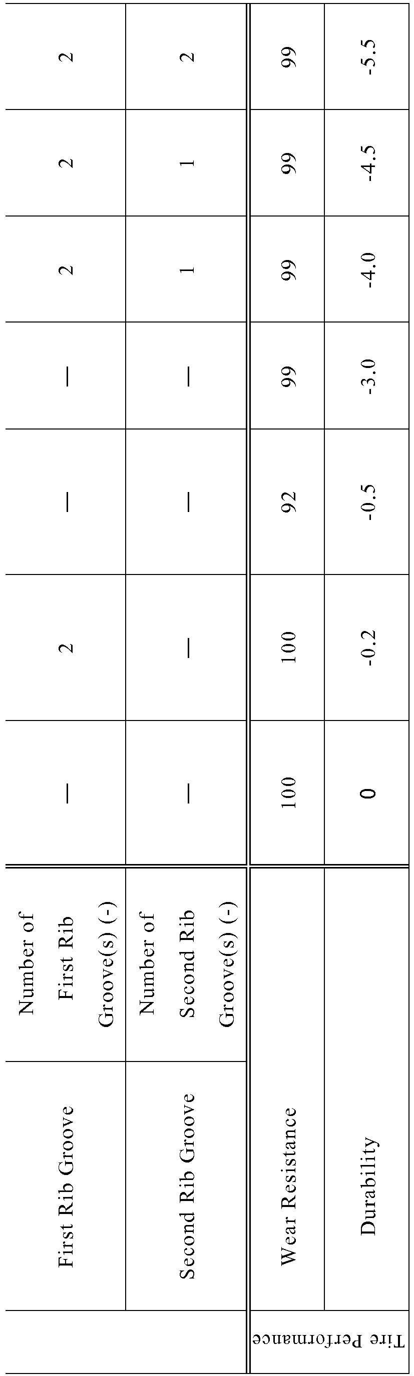

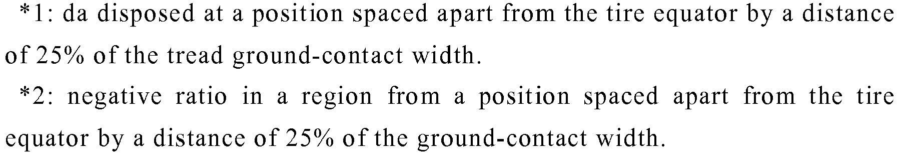

### INDUSTRIAL APPLICABILITY

As described above, the disclosed pneumatic tire for heavy load is capable of improving durability while ensuring wear resistance.

### REFERENCE SIGNS LIST

- 10 to 50: pneumatic tire for heavy load
- 1: pneumatic tire for heavy load
- 2: tread surface
- 3, 3': lug groove
- 3a: one end of the lug groove
- 3b: the other end of the lug groove
- 4: land portion
- 5: first rib groove
- 6: second rib groove
- 6a, 6b: second rib groove
- 120: bead portion
- 200: carcass
- 300: belt
- 301: first belt layer
- 302: second belt layer
- 303: third belt layer
- 304: fourth belt layer
- 305: fifth belt layer
- 306: sixth belt layer
- 300A: inner crossing belt group
- 300B: intermediate crossing belt group
- 300C: outer crossing belt group
- 300e: belt end
- 500: tread portion
- 700: sidewall portion
- 900: buttress portion
- da: depth of the lug groove
- di: depth of the first rib groove
- trd: tire radial direction
- twd: tire width direction
- Dr: depth of the second rib groove
- DC: rubber gauge
- L: land portion center line length
- Nc: negative ratio of a center region
- Ns: negative ratio of a shoulder region
- OD: tire outer diameter
- P: land portion center line
- P1 to P3: land portion center line segment
- Rc: center region
- Rs: shoulder region
- Rw: land portion width
- TG: tread ground-contact end
- Tw: tread ground-contact width
- α: tilt angle of the land portion center line relative to the tire equator direction
- α1 to: α3 tilt angle of the land portion center line segment relative to the tire equator direction

## Claims

1. A pneumatic tire (10, 20, 30, 40, 50) for heavy load comprising, on a tread surface (2) of the tire (10, 20, 30, 40, 50), land portions (4) defined by a plurality of lug grooves (3) each extending in the tread width direction while opening at one end thereof to the tread ground-contact end (TG), wherein:
the tire (10, 20, 30, 40, 50) has a negative ratio Nc of 2% to 10% in a tread center side region (Rc) which corresponds to a tread region having a width that accounts for 30% of the tread ground-contact width Tw with the tire equator (CL) being in the center in the tread width direction;
the lug groove (3) has a depth da, the land portion (4) has a width Rw, where the land portion width Rw is defined for each arbitrary point on a land portion center line P, and the land portion width Rw on the point refers to a width in an end view taken along a plane that passes through the point and is perpendicular to the land portion center line P, and the land portion (4) has an extending length L which is a length of the land portion center line P connecting the midpoints of the tread circumferential width of the land portion (4) between the tire equator (CL) and the tread ground-contact end (TG), so that the land portion center line P has a length of 0.5 L or more in a segment where Rw/da is 1.3 to 2.5;
the land portion center line P has a length of 0.3 L or more in a segment having a tilt angle α of 60° or less relative to the tire equator direction; and
the land portion center line P has a plurality of land portion center line segments (P1, P2) extending in different directions, among which a segment (P2) positioned on the tread width direction outside has, relative to the tire equator direction, a tilt angle (α2) that is smaller as compared with a tilt angle (α1), relative to the tire equator direction, of a segment (P1) positioned on the tire equator side.

2. The pneumatic tire (10, 20, 30, 40, 50) for heavy load according to claim 1, wherein the lug groove (3) has a width Gw of 4 mm to 20 mm in the tread center side region (Rc).

3. The pneumatic tire (10, 20, 30, 40, 50) for heavy load according to claim 1 or 2, wherein the depth da of the lug groove (3) is 50 mm to 150 mm.

4. The pneumatic tire (10, 20, 30, 40, 50) for heavy load according to any one of claims 1 to 3, wherein the tire (10, 20, 30, 40, 50) has a negative ratio Ns of 10% to 35% in a tread shoulder side region (Rs) which corresponds to a tread region on the outside of the tread center side region (Rc) in the tread width direction.

5. The pneumatic tire (10, 20, 30, 40, 50) for heavy load according to any one of claims 1 to 4, further comprising, in the tread shoulder side region (Rs), a first rib groove (5) extending along the tread circumferential direction,
wherein the first rib groove has a depth di of 0.3 da to 0.7 da.

6. The pneumatic tire (10, 20, 30, 40, 50) for heavy load according to claim 5, further comprising, in the tread center side region, a second rib groove (6) extending along the tread circumferential direction and having the other end of the lug groove (3) opening thereto,
wherein the second rib groove (6) has a depth Dr that is larger than the depth di of the first rib groove (5).

7. The pneumatic tire (10, 20, 30, 40, 50) for heavy load according to claim 6, comprising second rib grooves (6a, 6b) disposed on both sides relative to the tire equator (CL),
wherein the lug groove (3) opening at one end thereof to the tread ground-contact end (TG) disposed on one side relative to the tire equator (CL) has the other end opening only to the second rib groove (6a, 6b) disposed on the same side as the lug groove (3) relative to the tire equator (CL).

## Patentansprüche

1. Schwerlastluftreifen (10, 20, 30, 40, 50), an einer Lauffläche (2) des Reifens (10, 20, 30, 40, 50), Stegabschnitte (4) umfassend, die durch eine Vielzahl von Stollenrillen (3) definiert werden, die sich jeweils in Laufflächenbreitenrichtung erstrecken, während sie sich an einem Ende hiervon zum Laufflächen-Bodenkontaktende (TG) öffnen, bei welchem:
der Reifen (10, 20, 30, 40, 50) ein negatives Verhältnis Nc zwischen 2 % und 10 % in einer Laufflächenmittenseitenregion (Rc) aufweist, welche einer Laufflächenregion mit einer Breite entspricht, die 30 % der Laufflächen-Bodenkontaktbreite Tw darstellt, wobei der Reifenäquator (CL) in Bezug auf die Laufflächenbreitenrichtung in der Mitte liegt;
die Stollenrille (3) eine Tiefe da besitzt, der Stegabschnitt (4) eine Breite Rw besitzt, wobei die Stegabschnittsbreite Rw für jeden willkürlichen Punkt einer Stegabschnittsmittellinie P definiert ist, und die Stegabschnittsbreite Rw am Punkt sich auf eine Breite in einer Endansicht entlang einer Ebene bezieht, die den Punkt durchquert und rechtwinklig zur Stegabschnittsmittellinie P verläuft, und der Stegabschnitt (4) eine Ausdehnungslänge L besitzt, welche eine Länge der Stegabschnittsmittellinie P ist, welche die Mittelpunkte der Laufflächenumfangsbreite des Stegabschnitts (4) zwischen dem Reifenäquator (CL) und dem Laufflächen-Bodenkontaktende (TG) verbindet, so dass die Stegabschnittsmittellinie P eine Länge von 0,5 L oder darüber in einem Segment beträgt, in welchem Rw/da 1,3 bis 2,5 beträgt;
die Stegabschnittsmittellinie P eine Länge von 0,3 L oder darüber in einem Segment beträgt, welches einen Neigungswinkel α von 60° oder darunter in Bezug auf die Reifenäquatorrichtung besitzt; und
die Stegabschnittsmittellinie P eine Vielzahl von Stegabschnitts-Mittellinien-Segmenten (P1, P2) besitzt, welche sich in unterschiedliche Richtungen erstrecken, unter denen ein Segment (P2), welches in der Laufflächenbreitenrichtung außen positioniert ist, in Bezug auf die Reifenäquatorrichtung einen Neigungswinkel (α2) besitzt, der kleiner ist im Vergleich zu einem Neigungswinkel (α1) in Bezug auf die Reifenäquatorrichtung eines an der Reifenäquatorseite positionierten Segments (P1).

2. Schwerlastluftreifen (10, 20, 30, 40, 50) nach Anspruch 1, bei welchem die Stollenrille (3) eine Breite Gw von 4 mm bis 20 mm in der Laufflächenmittenseitenregion (Rc) besitzt.

3. Schwerlastluftreifen (10, 20, 30, 40, 50) nach Anspruch 1 oder 2, bei welchem die Tiefe da der Stollenrille (3) 50 mm bis 150 mm beträgt.

4. Schwerlastluftreifen (10, 20, 30, 40, 50) nach einem der Ansprüche 1 bis 3, bei welchem der Reifen (10, 20, 30, 40, 50) ein negatives Verhältnis Ns von 10 % bis 35 % in einer Laufflächenschulterseitenregion (Rs) besitzt, welche einer Laufflächenregion außerhalb der Laufflächenmittenseitenregion (Rc) in der Laufflächenbreitenrichtung entspricht.

5. Schwerlastluftreifen (10, 20, 30, 40, 50) nach einem der Ansprüche 1 bis 4, weiterhin umfassend, in der Laufflächenschulterseitenregion (Rs), eine erste Rippenrille (5), welche sich entlang der Laufflächenumfangsrichtung erstreckt,
wobei die erste Rippenrille eine Tiefe di von 0,3 da bis 0,7 da besitzt.

6. Schwerlastluftreifen (10, 20, 30, 40, 50) nach Anspruch 5, weiterhin beinhaltend, in der Laufflächenmittenseitenregion, eine zweite Rippenrille (6), welche sich entlang der Laufflächenumfangsrichtung erstreckt und zu welcher sich das andere Ende der Stollenrille (3) hin öffnet,
wobei die zweite Rippenrille (6) eine Tiefe Dr besitzt, die größer ist als die Tiefe di der ersten Rippenrille (5).

7. Schwerlastluftreifen (10, 20, 30, 40, 50) nach Anspruch 6, beinhaltend zweite Rippenrillen (6a, 6b), welche auf beiden Seiten in Bezug auf den Reifenäquator (CL) angeordnet sind,
wobei die Stollenrille (3), die sich an einem Ende hiervon zum Laufflächen-Bodenkontaktende (TG) öffnet, welches an einer Seite in Bezug auf den Reifenäquator (CL) angeordnet ist, sich mit dem anderen Ende nur zur zweiten Rippenrille (6a, 6b) öffnet, die auf der gleichen Seite wie die Stollenrille (3) in Bezug auf den Reifenäquator (CL) angeordnet ist.

## Revendications

1. Pneumatique (10, 20, 30, 40, 50) pour une charge lourde comprenant, sur une surface de bande de roulement (2) du pneumatique (10, 20, 30, 40, 50), des parties d'appui (4) définies par une pluralité de rainures de barrette (3) s'étendant chacune dans la direction de la largeur de la bande de roulement tout en s'ouvrant au niveau d'une extrémité de celle-ci vers l'extrémité en contact avec le sol de la bande de roulement (TG), dans lequel :
le pneumatique (10, 20, 30, 40, 50) a un rapport négatif Nc de 2 % à 10 % dans une zone côté centre de bande de roulement (Rc) qui correspond à une zone de bande de roulement ayant une largeur qui représente 30 % de la largeur de contact avec le sol de la bande de roulement Tw avec la ligne médiane de pneumatique (CL) qui est au centre dans la direction de la largeur de la bande de roulement ;
la rainure de barrette (3) a une profondeur da, la partie d'appui (4) a une largeur Rw, où la largeur de partie d'appui Rw est définie pour chaque point arbitraire sur un axe central de partie d'appui P, et la largeur de partie d'appui Rw sur le point fait référence à une largeur dans une vue d'extrémité prise le long d'un plan qui passe à travers le point et est perpendiculaire à l'axe central de partie d'appui P, et la partie d'appui (4) a une longueur de déploiement L qui est une longueur de l'axe central de partie d'appui P connectant les points médians de la largeur circonférentielle de bande de roulement de la partie d'appui (4) entre la ligne médiane de pneumatique (CL) et l'extrémité de contact avec le sol de la bande de roulement (TG), de sorte que l'axe central de partie d'appui P a une longueur de 0,5 L ou plus dans un segment où Rw/da est de 1,3 à 2,5 ;
l'axe central de partie d'appui P a une longueur de 0,3 L ou plus dans un segment ayant un angle d'inclinaison α de 60° ou moins par rapport à la direction de la ligne médiane de pneumatique ; et
l'axe central de partie d'appui P a une pluralité de segments d'axe central de partie d'appui (P1, P2) s'étendant dans des directions différentes, parmi lesquels un segment (P2) positionné sur l'extérieur dans la direction de la largeur de la bande de roulement a, par rapport à la direction de la ligne médiane de pneumatique, un angle d'inclinaison (α2) qui est plus petit par rapport à un angle d'inclinaison (α1), par rapport à la direction de la ligne médiane de pneumatique, d'un segment (P1) positionné sur le côté de la ligne médiane de pneumatique.

2. Pneumatique (10, 20, 30, 40, 50) pour une charge lourde selon la revendication 1, dans lequel la rainure de barrette (3) a une largeur Gw de 4 mm à 20 mm dans la zone côté centre de bande de roulement (Rc).

3. Pneumatique (10, 20, 30, 40, 50) pour une charge lourde selon la revendication 1 ou 2, dans lequel la profondeur da de la rainure de barrette (3) est de 50 mm à 150 mm.

4. Pneumatique (10, 20, 30, 40, 50) pour une charge lourde selon l'une quelconque des revendications 1 à 3, dans lequel le pneumatique (10, 20, 30, 40, 50) a un rapport négatif Ns de 10 % à 35 % dans une zone côté épaulement de bande de roulement (Rs) qui correspond à une zone de bande de roulement sur l'extérieur de la zone côté centre de bande de roulement (Rc) dans la direction de la largeur de la bande de roulement.

5. Pneumatique (10, 20, 30, 40, 50) pour une charge lourde selon l'une quelconque des revendications 1 à 4, comprenant en outre, dans la région côté épaulement de bande de roulement (Rs), une première rainure formant nervure (5) s'étendant le long de la direction circonférentielle de la bande de roulement,
dans lequel la première rainure formant nervure a une profondeur di de 0,3 da à 0,7 da.

6. Pneumatique (10, 20, 30, 40, 50) pour une charge lourde selon la revendication 5, comprenant en outre, dans la zone côté centre de la bande de roulement, une deuxième rainure formant nervure (6) s'étendant le long de la direction circonférentielle de la bande de roulement et ayant l'autre extrémité de la rainure de barrette (3) s'ouvrant sur celle-ci,
dans lequel la deuxième rainure formant nervure (6) a une profondeur Dr qui est plus grande que la profondeur di de la première rainure formant nervure (5).

7. Pneumatique (10, 20, 30, 40, 50) pour une charge lourde selon la revendication 6, comprenant des deuxièmes rainures formant nervure (6a, 6b) disposées sur les deux côtés par rapport à la ligne médiane de pneumatique (CL),
dans lequel la rainure de barrette (3) s'ouvrant au niveau d'une extrémité de celle-ci vers l'extrémité en contact avec le sol de la bande de roulement (TG) disposée sur un côté par rapport à la ligne médiane de pneumatique (CL) a l'autre extrémité s'ouvrant uniquement vers la deuxième rainure formant nervure (6a, 6b) disposée sur le même côté que la rainure de barrette (3) par rapport à la ligne médiane de pneumatique (CL).
